# EUROPÄISCHE PATENTANMELDUNG

(11) **EP 4 742 304 A1**
(43) Veröffentlichungstag der Anmeldung: **13.05.2026**
(21) Anmeldenummer: 24211189.6
(22) Anmeldetag: 06.11.2024
(51) Int. Cl.: H01M 4/04, H01M 4/1395, H01M 4/1397, H01M 4/46, H01M 4/58, H01M 10/054, H01M 10/0562, H01M 10/058

(54) **VERFAHREN ZUR HERSTELLUNG EINES ELEKTRODENSTAPELS FÜR EINE FLUORID-IONEN-BATTERIE**

(71) Anmelder: PrimeSolid Batteries GmbH, 14193 Berlin (DE)
(72) Erfinder: OSTERWALD, Manfred, 14193 Berlin (DE)
(74) Vertreter: Gulde & Partner

(57) **Zusammenfassung**

Die Erfindung betrifft ein Verfahren zur Herstellung eines Elektrodenstapels für eine FluoridIonen-Batterie. Das Verfahren umfasst die Schritte:
a) Bereitstellen einer Metallfolie, die i) nach einer ersten Variante im Wesentlichen aus AI besteht oder ii) nach einer zweiten Variante im Wesentlichen aus einem Metall ausgewählt aus der Gruppe Ag, Cu und Fe besteht;
b) Beschichten einer Seite der Metallfolie mit einer fluoridleitenden Festelektrolytschicht; und
c) Beschichten der Festelektrolytschicht mit einer weiteren Schicht, die i) nach der ersten Variante im Wesentlichen aus einem Metallfluorid oder einer fluorierten Metallfolie eines Metalls ausgewählt aus der Gruppe Ag, Cu und Fe besteht oder ii) nach der zweiten Variante aus einem Metallfluorid oder einer fluorierten Metallfolie aus AI besteht.

## Beschreibung

Die Erfindung betrifft ein Verfahren zur Herstellung eines Elektrodenstapels für eine Fluorid-Ionen-Batterie.

### Technologischer Hintergrund

Das moderne Leben hängt in hohem Maße von Energiespeichern ab. Von tragbarer Elektronik bis hin zu Elektrofahrzeugen (EVs), elektrischen Zügen und Flugzeugen profitieren alle von modernen wiederaufladbaren Energiespeichertechnologien. Auch für die Speicherung von Energie aus Solar-, Wind- und Gezeitenkraftwerken werden Energiespeicher benötigt. Daher steigt die Nachfrage nach effizienten und nachhaltigen Systemen drastisch an.

Lithium-Ionen-Batterien (LIBs) haben sich aufgrund ihrer hohen Energiedichte, spezifischen Leistung und Zyklenstabilität als vorteilhaft für tragbare elektronische Geräte und als geeignet für Elektrofahrzeuge erwiesen. Die vielfältigen Einsatzmöglichkeiten von LIBs können jedoch zu einer raschen Erschöpfung der Lithiumressourcen führen, die nur in geringen Mengen vorhanden und räumlich stark begrenzt sind. Darüber hinaus sind nicht nur die Vorkommen von Lithium, sondern auch die Vorkommen anderer Schlüsselelemente (z.B. Co), die in LIBs verwendet werden, begrenzt. Daher besteht ein anhaltender Bedarf an alternativen Energiespeichersystemen, die auf dem Transport anderer Ionen als Li+ basieren und auch zur Verwendung anderer Elemente in den Elektrodenmaterialien führen könnten.

Als Alternativen zu LIBs wurden beispielsweise Natrium-Ionen-Batterien (NIBs), Magnesium-Ionen-Batterien, Calcium-Ionen-Batterien und Aluminium-Ionen-Batterien vorgeschlagen. In diesen Systemen haben die wandernden Ionen niedrige Standard-Reduktionspotentiale, ähnlich denen von Lithium. Im Gegensatz dazu besitzen die wandernden Ionen in Fluorid-Ionen-Batterien (FIBs) ein sehr hohes Standardreduktionspotenzial. FIBs können daher potenziell höhere gravimetrische Energiedichten erreichen als z. B. wiederaufladbare Batteriesysteme aus Natrium- und Kaliumionenbatterien. Die volumetrische Energiedichte von FIBs ist besonders hoch, was für Elektrofahrzeuge und große Speicheranwendungen von Interesse ist. Neben der hohen Energiedichte haben FIBs noch weitere einzigartige Eigenschaften. Fluor ist das stärkste Oxidationsmittel und das elektronegativste Element des Periodensystems. Daher ist das Fluoridion ein sehr redoxstabiles Anion, das ein breites elektrochemisches Potentialfenster ermöglicht. Darüber hinaus sind fluoridhaltige Materialien im Vergleich zu Lithiumreserven weltweit in größeren Mengen verfügbar.

FIBs funktionieren nach einem ähnlichen Prinzip wie Lithium-Ionen-Batterien, bei denen Ionen während der Lade- und Entladezyklen zwischen positiven und negativen Elektroden wandern. Der Hauptunterschied liegt in der Art der beteiligten Ionen:
- Die Anode besteht normalerweise aus einem Material, das in der Lage ist, Fluoridionen während der Entladephase aufzunehmen und zu speichern. Für die Anode können Materialien, wie beispielsweise Metalle, verwendet werden.
- Die Kathode besteht aus einem Material, das in der Lage ist, während der Ladephase Fluoridionen freizusetzen. Für die Kathode können verschiedene Materialien, wie beispielsweise Übergangsmetallfluoride, verwendet werden.
- Der Elektrolyt ist für die Bewegung der Fluoridionen zwischen Anode und Kathode von entscheidender Bedeutung. Er muss den Transport dieser Ionen ermöglichen und gleichzeitig die Stabilität während der elektrochemischen Reaktionen gewährleisten. In Fluoridionenbatterien können Festkörperelektrolyte oder ionische Flüssigkeiten verwendet werden.
- Ein Separator verhindert den direkten Kontakt zwischen Anode und Kathode, um einen Kurzschluss zu vermeiden und gleichzeitig den Durchgang der Ionen zu ermöglichen.

Bei den grundlegenden elektrochemischen Reaktionen während des Ladens und Entladens bewegen sich Fluoridionen zwischen Anode und Kathode. Die spezifischen Materialien, Elektrolyte und Konstruktionsdetails können entsprechend der laufenden Forschung und Entwicklung der FIB-Technologie variieren.

Festkörperbatterien haben gegenüber Batterien mit flüssigem Elektrolyt einige Vorteile, insbesondere in Bezug auf die Sicherheit. Für den Betrieb von Festkörperbatterien sind feste Elektrolyte erforderlich. Es gibt verschiedene fluoridleitende Festelektrolyte, die bei Raumtemperatur sehr hohe Leitfähigkeiten aufweisen. Der Festelektrolyt muss mit den Elektrodenmaterialien (Kathode und Anode) chemisch kompatibel sein, um einen schnellen Ionentransport der geladenen Spezies über die Grenzflächen zu gewährleisten, was nicht nur Stabilität gegenüber Redoxreaktionen erfordert. Darüber hinaus sollten Festelektrolyte bestimmte mechanische Eigenschaften aufweisen, z.B. ausreichende Flexibilität und Weichheit, die für die Herstellung einer Festkörperbatterie erforderlich sind. In der Literatur sind verschiedene fluoridleitende Festelektrolyte beschrieben worden. Diese Festelektrolyte lassen sich grob in zwei Verbindungsklassen einteilen: den Tysonit-Typ (Prototyp LaF₃) und den Fluorit-Typ (Prototyp CaF₂).

Als Anodenmaterial werden beispielsweise Metalle, wie Li, Mg und Na und für die Kathode Übergangsmetallfluoride der Elemente Bi, Cu, Fe, Al, Co, Ti und Zn vorgeschlagen.

Bisher werden FIBs in Wissenschaft und Vorentwicklung von Hand hergestellt. Für eine breite Anwendung ist jedoch eine industrielle Fertigungstechnik entscheidend. Eingesetzt wurden zumeist Materialpulver, die verpresst wurden und verschiedene Bedampfungsverfahren, wie zum Beispiel PVD oder CVD. Keines dieser Verfahren ist für die Produktion von FIBs in größeren Serien geeignet. Es besteht daher ein anhaltender Bedarf nach Technologien, die die Herstellung von FIBs in einem industriellen Fertigungsprozess ermöglichen.

### Zusammenfassung der Erfindung

Ein oder mehrere Nachteile des Standes der Technik werden durch die vorliegende Erfindung behoben oder zumindest gemindert. Die Erfindung stellt dazu ein Verfahren zur Herstellung eines Elektrodenstapels für eine Fluorid-Ionen-Batterie nach Anspruch 1 bereit. Das Verfahren umfasst die Schritte:
a) Bereitstellen einer Metallfolie, die i) nach einer ersten Variante im Wesentlichen aus Al besteht oder ii) nach einer zweiten Variante im Wesentlichen aus einem Metall ausgewählt aus der Gruppe Ag, Cu und Fe besteht;
b) Beschichten einer Seite der Metallfolie mit einer fluoridleitenden Festelektrolytschicht; und
c) Beschichten der Festelektrolytschicht mit einer weiteren Schicht, die i) nach der ersten Variante im Wesentlichen aus einem Metallfluorid oder einer fluorierten Metallfolie eines Metalls ausgewählt aus der Gruppe Ag, Cu und Fe besteht oder ii) nach der zweiten Variante aus einem Metallfluorid oder einer fluorierten Metallfolie aus Al besteht.

Weitere bevorzugte Varianten der Erfindung ergeben sich aus der nachfolgenden Beschreibung und den abhängigen Ansprüchen.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: illustriert vereinfacht das Ergebnis eines ersten Verfahrensschritts a) des erfindungsgemäßen Verfahrens nach einer Ausführungsform.
- Fig. 2: illustriert vereinfacht das Ergebnis eines zweiten Verfahrensschritts b) des erfindungsgemäßen Verfahrens nach einer Ausführungsform.
- Fig. 3: illustriert vereinfacht das Ergebnis eines dritten Verfahrensschritts c) des erfindungsgemäßen Verfahrens nach einer Ausführungsform.
- Fig. 4: zeigt eine schematische Schnittansicht einer zylindrischen Batteriezelle, die einen nach dem erfindungsgemäßen Verfahren hergestellten Elektrodenwickel enthält.

### Detaillierte Beschreibung der Erfindung

Es wird nun im Einzelnen auf Ausführungsformen näher eingegangen, die in den beigefügten Zeichnungen beispielhaft dargestellt sind. Die vorliegende Erfindung kann jedoch in verschiedenen Ausführungsformen verwirklicht werden und ist nicht auf die hier dargestellten Ausführungsformen beschränkt. In den Zeichnungen können die relativen Größen von Elementen, Schichten und Bereichen zur Verdeutlichung übertrieben dargestellt sein.

Obwohl die Begriffe "erste" und "zweite" verwendet werden, um verschiedene Elemente zu beschreiben, sollten diese Elemente nicht durch diese Begriffe eingeschränkt werden. Diese Begriffe werden nur verwendet, um ein Element von einem anderen zu unterscheiden. Beispielsweise kann ein erstes Element als zweites Element bezeichnet werden, und ebenso kann ein zweites Element als erstes Element bezeichnet werden, ohne dass dies den Rahmen dieser Offenbarung sprengen würde. Der Ausdruck "und/oder", wie er hier verwendet wird, schließt alle Kombinationen von einem oder mehreren der aufgeführten Elemente ein.

### Allgemeine Aspekte der Erfindung

Die Erfindung betrifft ein Verfahren zur Herstellung eines Elektrodenstapels für eine Fluoridlonen-Batterie. Das Verfahren umfasst die Schritte:
a) Bereitstellen einer Metallfolie, die i) nach einer ersten Variante im Wesentlichen aus AI besteht oder ii) nach einer zweiten Variante im Wesentlichen aus einem Metall ausgewählt aus der Gruppe Ag, Cu und Fe besteht;
b) Beschichten einer Seite der Metallfolie mit einer fluoridleitenden Festelektrolytschicht; und
c) Beschichten der Festelektrolytschicht mit einer weiteren Schicht, die i) nach der ersten Variante im Wesentlichen aus einem Metallfluorid oder einer fluorierten Metallfolie eines Metalls ausgewählt aus der Gruppe Ag, Cu und Fe besteht oder ii) nach der zweiten Variante aus einem Metallfluorid oder einer fluorierten Metallfolie aus AI besteht.

Erfindungsgemäß wurde erkannt, dass sich durch den Einsatz von Metallfolien und deren Beschichtung ein industrieller Fertigungsprozess für FIBs etablieren lässt. Die durch das Verfahren erhältlichen Elektrodenstapel lassen sich anschließend beliebig konfektionieren und in die Form gängiger Batterietypen bringen, zum Beispiel in Form einer Pouch-Zelle oder einer zylindrischen Zelle.

Es hat sich gezeigt, dass FIBs mit dem Aufbau AI/Festelektrolyt/(Ag, Cu, Fe)Fₓ beziehungsweise (Ag, Cu, Fe)/Festelektrolyt/AlFₓ für das erfindungsgemäße Herstellungsverfahren besonders geeignet sind. Metallfolien aus AI bzw. Ag, Cu oder Fe lassen sich besonders einfach mit einer fluoridleitenden Festelektrolytschicht beschichten und verleihen den Elektrodenstapel hinreichende mechanische Stabilität für die weitere Verarbeitung, zum Beispiel das Aufwickeln und Konfektionieren.

Der Ausdruck "im Wesentlichen bestehend aus" bedeutet, dass die Metallfolie beziehungsweise das Metallfluorid / die fluorierte Metallfolie der weiteren Schicht neben den obligatorischen Bestandteilen weitere Bestandteile aufweisen kann, die die wesentliche Funktion der obligatorischen Bestandteile als Elektroden einer FIB-Zelle nicht signifikant verändern. Vorzugsweise besteht die Metallfolie und/oder die weitere Schicht aus den obligatorischen Bestandteilen.

Schritt a) des Verfahrens sieht demnach die Bereitstellung einer Metallfolie für die nachfolgenden Verfahrensschritte vor. Die Folie kann beispielsweise von einer Rolle aus dem Folienmaterial bereitgestellt werden, sodass ein hoher Automatisierungsgrad in diesem Verfahrensschritt möglich ist. Die aus der Metallfolie hergestellte Elektrode besteht aus leitfähigem Material, ist zugleich Stromableiter und nimmt als Elektrode am elektro-chemischen Batterieprozess teil. Die Elektrode kann zudem als Substrat dienen, trägt also wesentlich zur Struktur, Festigkeit und Gestalt der Batterie bei.

In einer bevorzugten Verfahrensvariante weist die Metallfolie auf einer der Festelektrolytschicht gegenüberliegenden Seite eine elektrische Isolierung auf. Die elektrische Isolierung dient dazu, gegebenenfalls aneinandergrenzende Elektrodenstapel elektrisch voneinander zu isolieren. In einer Pouch-Zellen liegen beispielsweise mehrere Lagen von Elektrodenstapeln übereinander und dürfen sich nicht direkt elektrisch leitend kontaktieren. Ebenso müssen die gewunden Lagen einer gewickelten, zylindrischen Batterie elektrisch voneinander getrennt sein. Die elektrische Isolierung besteht aus einem elektrisch nicht-leitfähigem Material, beispielsweise einem Kunststoff. Die Isolierung kann von der Metallfolie getrennt vorliegen oder auf der Seitenoberfläche der Metallfolie haften.

Besonders bevorzugt ist die elektrische Isolierung eine isolierende Folie und wird vor Schritt a) mit der Metallfolie zu einem Laminat verbunden. Im Schritt a) wird dann einen Metallfolie bereitgestellt, deren eine Seite mit der isolierenden Folie laminiert ist. Die einseitig laminierte Metallfolie kann wiederum von der Rolle bereitgestellt werden, was den Fertigungsprozess vereinfacht.

Im Schritt b) wird eine Seite der Metallfolie mit einer fluoridleitenden Festelektrolytschicht beschichtet. Das Beschichten kann prinzipiell mit einem beliebigen Beschichtungsverfahren erfolgen. Unter Beschichten wird in der Fertigungstechnik ein Fertigungsverfahren verstanden, das zum Aufbringen einer festhaftenden Schicht aus formlosem Stoff auf die Oberfläche eines Werkstückes genutzt wird.

Nach einer bevorzugten Verfahrensvariante erfolgt das Beschichten der Metallfolie mit der Festelektrolytschicht im Schritt b) mittels eines Druckverfahrens, insbesondere mittels Flexodruck. Es hat sich gezeigt, dass der Auftrag des Festelektrolyten auf der Metallfolie mit einem Druckverfahren möglich ist. Druckverfahren ermöglichen den Auftrag gleichmäßiger Beschichtungen in sehr kurzer Prozesszeit, sodass ein hoher Grad an Automatisierung erreichbar ist. Flexodruck ist ein Rollenrotationsdruckverfahren, bei dem flexible Druckplatten, die beispielsweise aus Gummi bestehen, und niedrigviskose Dispersionen des Festelektrolyten verwendet werden.

Die herzustellende Festelektrolytschicht besteht vorzugsweise im Wesentlichen aus LaF₃ oder BaF₂ oder einem Gemisch derselben. Zur Herstellung der Schicht kann das Material direkt oder als Dispersion aufgetragen werden. Der Ausdruck "im Wesentlichen bestehend aus" bedeutet, dass die Festelektrolytschicht neben den obligatorischen Bestandteilen weitere Bestandteile aufweisen kann, die die wesentliche Funktion der obligatorischen Bestandteile als Festelektrolyt einer FIB-Zelle nicht signifikant verändern. Vorzugsweise besteht die Festelektrolytschicht aus den obligatorischen Bestandteilen.

Im Schritt c) des Verfahrens wird die Festelektrolytschicht mit einer weiteren Schicht versehen, die als Elektrode dient und am elektro-chemischen Prozess der Batterie beteiligt ist. Nach der ersten Variante besteht diese Schicht im Wesentlichen aus einem Metallfluorid oder einer fluorierten Metallfolie eines Metalls ausgewählt aus der Gruppe Ag, Cu und Fe. Nach der zweiten Variante besteht die Schicht aus einem Metallfluorid oder einer fluorierten Metallfolie aus Al. In beiden Varianten kann demnach auch eine fluorierte Metallfolie aufgetragen werden. Über die zusätzliche Folie wird die Stabilität des Elektrodenstapels weiter erhöht. Die fluorierte Metallfolie kann als Rolle bereitgestellt werden, sodass sich auch dieser Schritt des Fertigungsverfahrens automatisieren lässt. Die aus der fluorierten Metallfolie hergestellte weitere Elektrode besteht demnach teils aus leitfähigem Material, ist zugleich Stromableiter und nimmt als Elektrode am elektro-chemischen Batterieprozess teil. Die Elektrode kann zudem als Substrat dienen, trägt also wesentlich zur Struktur, Festigkeit und Gestalt der Batterie bei.

Gegebenenfalls kann nach Schritt c) noch eine elektrisch isolierende Schicht auf der Elektrode aufgebracht werden. Die elektrisch isolierende Schicht kann ergänzend oder anstelle der weiter oben genannten elektrischen Isolierung aufgetragen werden. Die Schicht besteht aus einem elektrisch nicht-leitfähigem Material, beispielsweise einem Kunststoff. Denkbar ist, diese Schicht in Form einer elektrisch isolierenden Folie bereitzustellen. Ebenso kann die Schicht vor Schritt c) mit der fluorierten Metallfolie zu einem Laminat verbunden werden. Im Schritt c) wird dann einen fluorierte Metallfolie bereitgestellt, deren eine Seite mit der elektrisch isolierenden Folie laminiert ist. Die einseitig laminierte fluorierte Metallfolie kann wiederum von der Rolle bereitgestellt werden, was den Fertigungsprozess vereinfacht.

Der durch die vorgenannten Verfahrensschritte erhältliche Elektrodenstapel wird anschließend zur einer Batteriezelle zusammengefügt. Der Elektrodenstapel kann beispielsweise auf einer Rolle oder Spule zu einer zylindrischen Zelle rund gewickelt werden, zum Beispiel im Format 18650. Alternativ kann der Elektrodenstapel zu einer Pouch-Zelle gefaltet werden. Denkbar ist auch, den Elektrodenstapel durch Zuschnitt und Stapeln zu einer Batterie in Stackbauweise gegebenenfalls mit Lagen wechselnder Polarität zusammenzustellen.

Bei den weit verbreiteten zylindrischen Zellen mit zumeist massiver metallischer Außenhülle sind die aktiven Schichten um die innere Elektrode gewickelt. Im Gegensatz dazu werden bei Pouch-Zellen die gestapelten oder gefalteten aktiven Schichten von einer flexiblen Außenfolie, meist auf Aluminiumbasis, umschlossen. Die offenen Seiten der Außenbeutel sind in der Regel thermisch verschweißt. Im Inneren können mehrere elektrische Einzelzellen gestapelt werden, um bei Reihenschaltung die elektrische Spannung und bei Parallelschaltung die Kapazität und Strombelastbarkeit zu erhöhen. Die äußere Folienhülle wird am Ende des Herstellungsprozesses vakuumiert, wodurch die Zellschichten verdichtet und fixiert werden, aber in der Regel flexibel bleiben.

Im Gegensatz zu den zylindrischen Bauformen, die aufgrund der Gehäusekonstruktion einen höheren Innendruck ohne mechanische Verformung aushalten, kommt es bei Pouch-Zellen auch im regulären Betrieb durch Alterung und ohne technischen Defekt zu einer leichten Aufblähung der Zelle. Ein weiterer Nachteil ist die Schwierigkeit, dass Pouch-Zellen in den unterschiedlichsten Formen hergestellt werden und im Gegensatz zu zylindrischen Zellen keine genormten Abmessungen haben. Dies erschwert den Austausch beim Endkunden und eine kostensparende Massenproduktion.

Eine bevorzugte Variante des Verfahrens betrifft daher die Herstellung zylindrischer Zellen. Dazu ist vorgesehen, dass der durch Schritt c) erhaltene Elektrodenstapel zu einem Elektrodenwickel aufgerollt wird, wobei die Metallfolie eine Außenseite des Elektrodenwickels bildet. Der Elektrodenwickel kann dann in üblicher Weise zur Produktion einer zylindrischen FIB-Zelle genutzt werden und beispielsweise in ein den Wickel aufnehmendes zylindrisches Gehäuse eingebracht werden.

### Ausführungsbeispiel

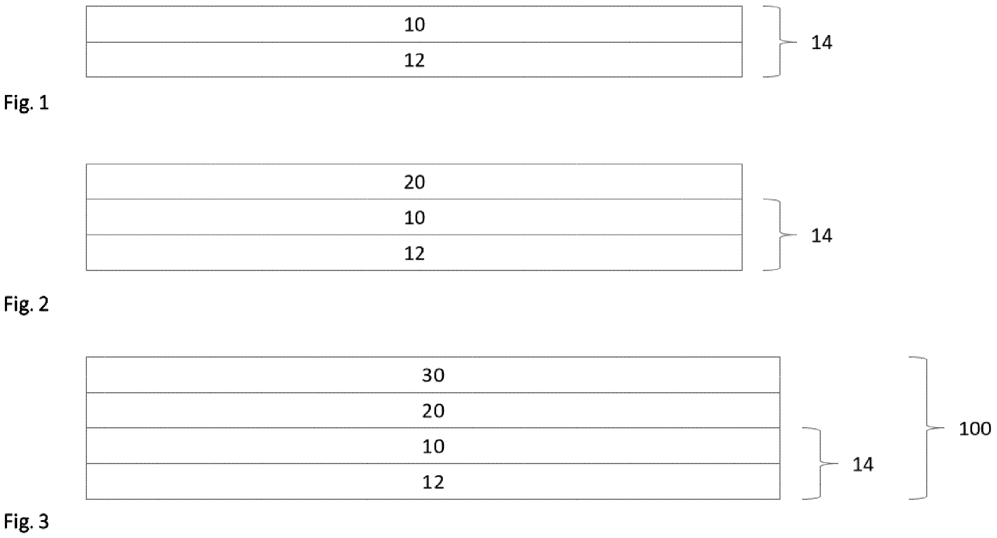

Fig. 1 zeigt - stark schematisiert - das Ergebnis eines ersten Verfahrensschritts a) des erfindungsgemäßen Verfahrens gemäß einer Ausführungsform. Im Schritt a) wird eine Metallfolie 10 bereitgestellt, die im Wesentlichen oder vollständig aus AI besteht und eine Foliendicke von 8 µm aufweist. Auf der Rückseite der Metallfolie 10 ist ein elektrischer Isolator 12 aufgebracht, der aus einer ca. 2 µm dicken Schicht eines Isolatorlacks besteht. Das Laminat 14 aus Metallfolie 10 und Isolator 12 wird in einem vorgelagerten Schritt hergestellt und von einer Rolle abgewickelt.

Fig. 2 illustriert - ebenfalls stark schematisiert - das Ergebnis eines zweiten Verfahrensschritts b), bei dem die nicht vom Isolator 12 bedeckte Seite der Metallfolie 10 mit einer fluoridleitenden Festelektrolytschicht 20 beschichtet wird. Konkret wird eine 2 µm dicke Schicht aus LaF₂ mittels eines Rollenrotationsdruckverfahrens (Flexodruck) aufgetragen.

Fig. 3 illustriert - erneut stark schematisiert - das Ergebnis eines dritten Verfahrensschritts c) des erfindungsgemäßen Verfahrens. Im Schritt c) wird die zuvor aufgetragene Festelektrolytschicht 20 mit einer weiteren Schicht 30 bedeckt. Die Schicht 30 besteht im Wesentlichen aus einer fluorierten Silberfolie mit einer Dicke von etwa 3 µm. Die fluorierte Silberfolie wird in einem vorgelagerten Schritt hergestellt und von einer Rolle abgewickelt. Das Endprodukt von Schritt c) ist ein Elektrodenstapel 100.

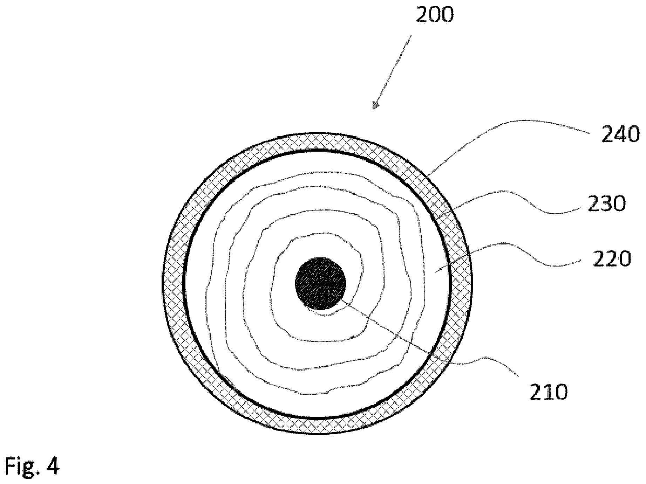

Fig. 4 zeigt eine schematische Schnittansicht einer zylindrischen Batteriezelle 200. Der durch Schritt c) erhaltene Elektrodenstapel 100 ist dabei zu einem Elektrodenwickel 220 aufgerollt, wobei der Isolator 12 eine Außenseite des Elektrodenwickels 220 bildet. Der Elektrodenwickel 220 ist um eine innere Elektrode 210 gewickelt und in ein metallisches Gehäuse 230 eingesetzt. An der Außenseite des metallischen Gehäuses 230 ist eine als thermische und elektrische Isolation dienende Beschichtung 240 angebracht.

Folgende weitere Elektrodenstapel sind dereit in der Entwicklung:

| Substrat | Anode | Elektrolyt | Kathode | Ableiter |
|---|---|---|---|---|
| Al | Al | LaF₃ + BaF₂ | AgF | Ag |
| Al | Al | LaF₃ + BaF₂ | CuF₂ | Cu |
| Al | Al | LaF₃ + BaF₂ | FeF₂ | Fe |
| Fe | Ag | LaF₃ + BaF₂ | PbF₂ | Fe |
| Cu | Cu | LaF₃ + BaF₂ | CaF₂ | Fe |
| Cu | Cu | LaF₃ + BaF₂ | PbF₂ | Fe |

## Patentansprüche

1. Verfahren zur Herstellung eines Elektrodenstapels für eine Fluorid-Ionen-Batterie, umfassend die Schritte:
a) Bereitstellen einer Metallfolie, die i) nach einer ersten Variante im Wesentlichen aus AI besteht oder ii) nach einer zweiten Variante im Wesentlichen aus einem Metall ausgewählt aus der Gruppe Ag, Cu und Fe besteht;
b) Beschichten einer Seite der Metallfolie mit einer fluoridleitenden Festelektrolytschicht; und
c) Beschichten der Festelektrolytschicht mit einer weiteren Schicht, die i) nach der ersten Variante im Wesentlichen aus einem Metallfluorid oder einer fluorierten Metallfolie eines Metalls ausgewählt aus der Gruppe Ag, Cu und Fe besteht oder ii) nach der zweiten Variante aus einem Metallfluorid oder einer fluorierten Metallfolie aus AI besteht.

2. Verfahren nach Anspruch 1, **dadurch gekennzeichnet, dass** das Beschichten der Metallfolie mit der Festelektrolytschicht im Schritt b) mittels eines Druckverfahrens, insbesondere mittels Flexodruck, erfolgt.

3. Verfahren nach einem der vorhergehenden Ansprüche, **dadurch gekennzeichnet, dass** die Metallfolie auf einer der Festelektrolytschicht gegenüberliegenden Seite eine elektrische Isolierung aufweist.

4. Verfahren nach Anspruch 3, **dadurch gekennzeichnet, dass** die elektrische Isolierung eine isolierende Folie ist und vor Schritt a) mit der Metallfolie zu einem Laminat verbunden wird.

5. Verfahren nach einem der vorhergehenden Ansprüche, **dadurch gekennzeichnet, dass** der durch Schritt c) erhaltene Elektrodenstapel zu einem Elektrodenwickel aufgerollt wird, wobei die Metallfolie eine Außenseite des Elektrodenwickels bildet.

6. Verfahren nach einem der vorhergehenden Ansprüche, **dadurch gekennzeichnet, dass** Festelektrolytschicht im Wesentlichen aus LaF₃, BaF₂ oder einem Gemisch derselben besteht.
